# EUROPEAN PATENT APPLICATION

(11) **EP 4 333 359 A1**
(43) Date of publication of application: **06.03.2024**
(21) Application number: 22193910.1
(22) Date of filing: 05.09.2022
(51) Int. Cl.: H04L 9/06, H04L 9/32

(54) **METHODS AND SYSTEM FOR GENERATING AND VERIFYING ZERO-KNOWLEDGE PROOF OF APPROXIMATE LOCATION KNOWLEDGE**

(71) Applicant: Nagravision Sàrl, 1033 Cheseaux-sur-Lausanne (CH)
(72) Inventor: GAGLIARDONI, Tommaso, 1033 Cheseaux-sur-Lausanne (CH); FISCHER, Jean-Bernard, 1033 Cheseaux-sur-Lausanne (CH); Yolan, ROMAILLER, 1033 Cheseaux-sur-Lausanne (CH)
(74) Representative: Mewburn Ellis LLP

(57) **Abstract**

A prover device (P) and methods for generating a zero-knowledge proof (18) of approximate knowledge of a reference location (Xv). The method includes:
- obtaining a plurality of reference signals (13) originating from a respective plurality of reference sources (12) and acquired at a test location (Xp) within observable range of the reference sources;
- constructing an initial codeword from the obtained reference signals (13), this codeword forming a representation of the test location (Xp);
- applying a block-based error correction decoding operation on the initial codeword, thereby obtaining an assessment codeword;
- applying a hashing operation on the assessment codeword, thereby obtaining a hash value representing the zero-knowledge proof, and
- providing the hash value to a verifier device (V), to allow the latter to compare the hash value with a reference hash value and thereby assess validity of the zero-knowledge proof.

In addition, a complementary verifier device and corresponding verification methods are provided.

## Description

### Technical Field

The invention relates to methods for generating and verifying a zero-knowledge proof of approximate location knowledge, and to devices and a system configured to execute such methods. Furthermore, the invention relates to computer program products configured to perform the proposed methods, and computer readable media comprising such computer programs.

### Background Art

In cryptography, a so-called "zero-knowledge proof of knowledge" method allows one entity - referred to as the "prover" - to convince another entity - referred to as the "verifier" - that the prover has knowledge of some secret information, without revealing this secret information to the verifier. Instead of sending the secret information, the prover tries to convince the verifier of its knowledge by sending data that is derived from the secret information. The verifier can then compare this received data to a similar set of data that is has available or has derived itself, thus allowing the verifier to check whether the prover actually possessed the knowledge of the secret information. A zero-knowledge proof (ZKP) is designed to be computationally secure, meaning that it is computationally infeasible to reconstruct the secret information from the information sent by the proving entity. ZKP methods typically include an algorithm that is executed on the side of the prover to generate a statement for proving knowledge of the secret, as well as a further algorithm that is executed on the side of the verifier through which the verifier may check the validity of the statement. When the verifying entity interacts directly with the proving entity, this is referred to as an "interactive ZKP method". In such cases, the proving entity and verifying entity may need to be in direct signal communication with each other prior to or during the verification stage.

An effective zero-knowledge proof of knowledge of a particular spatial location preferably complies with the following two requirements:
Firstly, the ZKP from the prover should not reveal the location data itself to the verifier, but instead should be generated from the acquired data in the form of a non-recognizable, non-colliding and hard-to-reverse-engineer output (i.e. "zero knowledge").
Secondly, the proof should be perceived as correct by the verifier, not only for the ground truth location, but also for a set of locations that are sufficiently close but not identical to this ground truth location.

So-called "hashes", which form a subset of one-way cryptographical functions, are highly suitable for meeting the first requirement. In principle, the location of the prover might be used directly as input of a hash function. The relation between input and output of a hash function is deterministic, so in principle, both prover and verifier will be able to derive the same hash value from a given spatial location. However, the relation between variations in the input and the output of a hash function is inherently chaotic, meaning that tiny variations in the input will lead to radically different outputs. This latter property is at tension with the second requirement. Directly hashing a location that is only approximately correct will lead to a hash outcome that differs radically from the hash output corresponding to the correct location expected by the verifier. This direct hashing approach is therefore unsuitable for generating ZKP of location knowledge.

Patent document US2004/0205194A1 describes a method for checking whether a user device is allowed to proceed with a transaction when located within a particular licensing region. This document describes a ZKP method in which the general spatial regions are approximated by cells, each cell being identified by a sequence of integer position coordinates. Real-valued coordinate sequences are binned into bounding integer ranges to extract a discrete set of cells. The hashes of the cells can be computed by a transaction controller, and this controller can compare these hashes to a received hash that is calculated by the user device based on location information from a GPS receiver.

A problem experienced with the known method is that the user device needs to be capable of determining its present location in an absolute sense (e.g. by using well-resolved GPS readings) before being able to interpolate to a particular one of the predetermined set of discrete cells that is to be used as input for the hash calculated by the user device.

It would be desirable to provide devices and methods which allow generating and verifying zero-knowledge proofs of approximate location knowledge based on less deterministic spatial observations.

### Summary of Invention

Therefore, according to a first aspect, there is provided a method, executed in a prover device, for generating a zero-knowledge proof (ZKP) of approximate knowledge of a reference location. The method includes:
- obtaining a plurality of reference signals originating from a respective plurality of reference sources and acquired at a test location within observable range of the reference sources;
- constructing an initial codeword from the obtained reference signals, the initial codeword forming a representation of the test location;
- applying a block-based error correction decoding operation on the initial codeword, thereby obtaining an assessment codeword;
- applying a hashing operation on the assessment codeword, thereby obtaining a hash value representing the ZKP, and
- providing the hash value to a verifier device, to allow the verifier device to compare the hash value with a reference hash value and thereby assess a validity of the ZKP.

The proposed method and the corresponding verification method enable devices or services to perform privacy-preserving approximate location-matching, without needing a trusted third party. In the present context, the term "location" is used to refer to a location of the associated object in physical space. This may for instance be a location of this object on or near the surface of the earth (i.e. a "geospatial location"). By including a block-based error correction decoding operation on the initial codeword obtained from the reference signals, the ZKP can be reproduced from the acquired reference signals even when the conditions of some of the signals are slightly modified for a short time, for instance as a result of partial signal shielding, interference, or other unpredictable time-dependent effects. The proposed method is particularly able to correct for burst errors, which may for instance arise when two nearby signal sources are both slightly attenuated by a temporary obstruction or local disturbance.

A block-based error correction encoding algorithm is a mapping of elements from an ordered k-tuple of symbols into a unique ordered n-tuple of symbols, wherein n > k. The encoding algorithm appends redundancy symbols to the original k-tuple. A block-based error correction decoding algorithm is a reversed operation that maps a received n'-tuple of symbols into its nearest valid n-tuple of symbols (this valid n-tuple corresponds to a unique valid k-tuple). A decoding operation removes the redundancy symbols to recover the original symbols. If the received n'-tuple is correctly mapped into the original encoded n-tuple, then the decoded k-tuple is guaranteed to be the original k-tuple. Examples of suitable block-based error correction decoding operations are decoding algorithms for Bose-Chaudhuri-Hocquenghem (BCH) codes, and in particular decoding algorithms for Reed-Solomon (RS) codes. Details of block-based error correction coding and decoding algorithms are known and are for instance described in ref.[1].

The methods proposed in the present disclosure may for instance be used in mobile devices for privacy-preserving applications that involve approximate geo-matching, for example in dating apps or treasure hunt games. The verifier, upon deciding that the location proof is valid, may proceed with executing or permitting a particular action or service. For instance, the verifier may send particular data to the prover, or approve a monetary transaction, or initiate a mechanical action like opening a door, or proceed with a blockchain-based transaction, etc. Alternatively, the method(s) may be employed in a tracking beacon, for example in a beacon that assists in triggering one or more determined actions (e.g. opening a container, alerting personnel, logging an event) upon arriving at a certain destination that should not be disclosed in advance to the beacon. As an example of this: a safe is used to deliver a valuable cargo to an untrusted receiver with whom the sender does not share any authentication key. The sender and receiver only agree to have the delivery take place at a certain location, and to load the safe on a third-party transport service that travels along a fixed route. But both the sender and receiver want to avoid that the transporter reverse-engineers the safe to extract advance knowledge of the delivery location.

The phrase "a test location within observable range of the reference sources" refers herein to a location of the signal acquiring entity that is sufficiently near to the reference signals such that the signals are physically measurable by this entity (i.e. resolvable relative to a noise threshold) and that the entity can mutually distinguish the sources from which these signals originate (i.e. resolvable relative to each other). The observable range may but does not necessarily involve a direct line of sight between the sources and the entity that acquires the signals. In the proposed method, the reference signals may be acquired by the prover device on-the-fly, when the prover device is present at the test location, and by means of a sensor that is part of the prover device. Alternatively, the reference signals may have been recorded at an earlier time and stored by the prover device for future use, for instance during a previous visit of the test location. Or the signals may have been recorded by another device carrying the sensor, this other device being in signal communication with the prover device.

In an embodiment of the method, the applying of the block-based error correction decoding operation includes:
- using a block size (n) corresponding to a number of symbols present in the initial codeword that is provided as input to the block-based error correction decoding operation, and
- using a further block size (k) corresponding to a further number of symbols present in the assessment codeword that is obtained as output from the block-based error correction decoding operation.

The block size and the further block size are both positive integer values (i.e. n, k > 0), and the further block size is always smaller than the block size (i.e. k < n).

The methods applied by the prover and verifier involve block-based error correction decoding transformations for which the codec-parameters and block sizes are preferably identical.

In embodiments of the method, the reference signals include respective significancy parameters and respective identity parameters. Each respective significancy parameter of a corresponding reference signal may be indicative of a relative significance of this reference signal. Each respective identity parameter of the corresponding reference signal may be indicative of an identity of this reference signal. Constructing the initial codeword may then include ordering part or all of the obtained reference signals in accordance with an ordering criterion that is based on the identity parameters, to form an ordered sequence of signals with corresponding significancy parameters that are used for forming the initial codeword.

By exploiting the significance parameters and identity parameters, the prover and verifier device may develop and agree on unambiguous and reproducible criteria for selecting, adding and/or ordering the obtained reference signals, before using these signals as basis for forming an initial codeword as input for the block-based error correction decoding operation.

The significancy parameters may for example represent a magnitude of the obtained reference signals, such as a received signal strength (RSS). Depending on the initial scaling for the significancy parameters as produced by the sensor, the significancy parameters may be used directly as input (e.g. by concatenating) when forming the initial codeword, or may first be mapped or rescaled to an integer numerical range before being concatenated to form the initial codeword.

The identity parameters uniquely define the identity of each of the respective reference source from which a reference signal is received. The identity parameters may for instance be expressed by numerical symbols, so that the criterion may stipulate that the parameters are to be placed in numerically ascending or descending order. Alternatively, the identity parameters may be expressed by letters, so that the ordering criterion may stipulate an alphabetical ordering.

In embodiments wherein the prover device and verifier device rearrange part or all of the obtained (further) reference signals, the prover device and verifier devices may be informed of or may mutually establish an agreement about the ordering criterion to be used by both devices. This agreement may be communicated between the devices in advance.

According to embodiments of this first aspect and any of the other aspects, the reference signals may be Wi-Fi signals transmitted by a plurality of Wi-Fi signal sources located in a vicinity of the prover device. Alternatively or in addition, the further reference signals may be Wi-Fi signals transmitted by the Wi-Fi signal sources located in a vicinity of the verifier device. In this case, the significancy parameters may be expressed as a received signal strength indicator (RSSI), and the identity parameters may be expressed as at least one of a service set identifier (SSID) and a media access control (MAC) address of the respective Wi-Fi sources.

As an addition in further embodiments, or as an alternative in other embodiments, various other types of reference signals and sources may be used, like for instance radio signals emitted by base stations from cellular communication networks, by Bluetooth transmitters, by over-the-air television and/or radio transmitters, signals from global navigation satellite systems, light from nearby optical beacons, city lighting, or distant stars, or a combination of such signal sources.

In further embodiments of the method, the constructing of the initial codeword includes assessing whether a total number of reference signals obtained by the prover device is larger than the block size (n). If this comparison yields the Boolean value "true", then the method may further include:
- selecting, from the reference signals, a number of selected reference signals based on the significancy parameters, the number being equal to the block size, and
- the ordering of obtained reference signals involves rearranging the selected reference signals in accordance with the ordering criterion, to form an ordered sequence of selected reference signals with corresponding significancy parameters that are used for forming the initial codeword.

Advantageously, the prover (and/or verifier) can select the n most suitable reference source candidates for use in the subsequent block-based error correction decoding operation(s), to improve accuracy. Conversely, the total number of available reference sources with acceptable strength can first be assessed by the prover and verifier devices, before they agree on the most appropriate block size (n) to use for the block-based error correction decoding operations, thus providing flexibility.

In cases wherein the significancy parameters represent magnitudes (e.g. RSS) of the obtained reference signals, the selecting of reference signals may for instance involve picking the n strongest signals from the obtained reference signals. The prover device may discard the remaining reference signals that are considered less significant.

In embodiments wherein both the prover device and verifier device select sub-sets from the obtained (further) reference signals, the prover and verifier devices may be informed of or may mutually establish agreement about the selection criterion to be used by both devices. This agreement may be fixed or communicated between the devices in advance, and may be communicated together with the agreement about the ordering criterion to be used.

Optionally, the prover device may assess - before selecting the reference signals - whether the total number of obtained reference signals is smaller than the further block size (k). If true, then the prover device may decide to stop the current attempt of constructing the initial codeword, and instead attempt to obtain a fresh set of reference signals for constructing a fresh initial codeword. This will avoid using unnecessary processing time and resources.

Alternatively or in addition, the constructing of the initial codeword includes assessing whether the total number of reference signals obtained by the prover device is smaller than the block size (n). If this comparison yields the Boolean value "true", then the method may further include:
- adding, to the reference signals, one or more fictitious signals until a total number of reference and fictitious signals equals the block size. Here, the significancy parameter of each fictitious signal may be set to a lowest possible significance value, and the identity parameter of each fictitious signal may be set to a lowest available position in accordance with the ordering criterion;
- the ordering of part or all of the obtained reference signals involves rearranging the reference and fictitious signals in accordance with the ordering criterion, to form an ordered sequence of reference and fictitious signals with corresponding significancy parameters that are used for forming the initial codeword.

Advantageously, the prover and/or verifier can zero-pad the set of obtained reference signals with additional low-significant pseudo-signals, to ensure that the subsequent block-based error correction decoding operation(s) will be furnished with set of signals that complies with a predetermined requirement for the block size (n).

In cases where the significancy parameters represent magnitudes (e.g. RSS) of the obtained reference signals, the lowest possible significance value may, for instance, be a lowest possible magnitude as defined by the finite range of values that the sensor is able to produce.

In embodiments wherein both the prover device and verifier device add (further) fictitious signals to the obtained (further) reference signals, the prover and verifier devices may be informed of or may mutually establish an agreement about the number and type of fictitious signals to be added by both devices. This agreement may be fixed or communicated between the devices in advance, and may be communicated together with the agreement about the ordering criterion to be used.

To avoid using unnecessary processing time and resources, the prover device may optionally assess - before adding fictitious signals - whether the total number of obtained reference signals is smaller than the further block size (k). It true, then the prover device may decide to stop the current attempt of constructing the initial codeword, and instead attempt to obtain a fresh set of reference signals for constructing a fresh initial codeword.

In further embodiments, the applying of the block-based error correction decoding operation includes using a symbol size (m) corresponding to a number of bits for representing each symbol in the initial codeword and in the assessment codeword of the block-based error correction decoding operation. This symbol size has a positive integer value. The respective significancy parameters may be numeric values within a predetermined range of possible numeric values. In this case, the constructing of the initial codeword may involve mapping the respective numeric values of the significancy parameters onto corresponding symbols composed of m concatenated bits, thereby obtaining a set of rescaled significancy parameters that forms the initial codeword.

Advantageously, this allows selecting the granularity of the significancy parameters in accordance with the security requirements of the application, by optimizing a trade-off between security (i.e. increasing the resistance against brute-force guessing attacks, by increasing the number of possible block-based error correction output values that are considered incorrect in the comparison of hashes) and the accuracy (i.e. the possibility that a slightly deviating signal parameter measurement will be regarded by the block-based error correction decoding operation as an error that needs correcting to another value, eventually leading to a wrong hash value).

The significancy parameters may for instance be represented by a numeric value in a predetermined range from zero to a positive number A (including endpoints). In this case, the constructing of the initial codeword may include multiplying respective numeric values with a factor of 2 raised to the power of the symbol size (m) and dividing by A (i.e. value . 2^{m} / A), and then rounding each obtained result to an integer number (e.g. rounding down), thereby obtaining a set of rescaled significancy parameters that forms the initial codeword.

According to further embodiments, the method includes:
- obtaining a salt;
- applying the hashing operation on the combination of the assessment codeword with the salt to obtain the hash value, and
- providing both the hash value and the salt to the verifier device, to allow the verifier device to generate a reference hash value using the salt and to compare the hash value with the reference hash value.

In the present context, a (cryptographic) salt refers to random data that is used as additional input to a one-way function, in this case a hashing function. The input for the hashing function may for instance be obtained by concatenating the assessment codeword and the salt.

The addition of the salt ensures that the hashes calculated by the prover and verifier jointly change as soon as the salt is changed. This lowers not only the probability that external eavesdroppers can reverse-engineer the prover's location from the transmitted hash, but also the probability of zero-knowledge violation by the (possibly untrusted) verifier, as the verifier is deprived of the opportunity to build up a history of received hashes for guessing the current test location Xp of the prover.

In any of the embodiments of the above first aspect and/or embodiments of the below other aspects, the (further) block-based error correction decoding operation may be a Reed-Solomon (RS) decoding operation.

According to a second aspect, and in accordance with advantages and effects described herein above with reference to the first aspect, there is provided a verification method, executed in a verifier device, for verifying a zero-knowledge proof (ZKP) of approximate knowledge of a reference location. The verification method includes:
- receiving a hash value obtained by a prover device using a method in accordance with the first aspect;
- obtaining a reference hash value, and
- comparing the reference hash value with the hash value to assess a validity of the ZKP.

The reference hash value is generated by the verifier device or by another device, using a generation method that includes:
- obtaining a plurality of further reference signals, which originate from the respective plurality of reference sources, and which are acquired at the reference location within observable range of the reference sources;
- constructing a further initial codeword from the obtained further reference signals, the further initial codeword forming a representation of the reference location;
- applying a further block-based error correction decoding operation on the further initial codeword, thereby obtaining a further assessment codeword, and
- applying a further hashing operation on the further assessment codeword, thereby obtaining the reference hash value.

These reference sources are assumed to be the same sources from which the prover device obtained the reference signals acquired at the test location. In embodiments, the further reference signals may be acquired by the verifier device on-the-fly, when the verifier device is present at the reference location and by means of a further sensor that is part of the verifier device. Alternatively, the further reference signals may have been recorded at an earlier time and stored by the verifier device for future use, for instance during a previous visit of the reference location. Or the further signals may have been recorded by another device carrying the further sensor, this other device being in signal communication with the verifier device. In a further embodiment, the entire generation method is also executed by the verifier device.

If the comparing of the reference hash value with the hash value reveals that the hash values are equal, then the verifier regards the ZKP as valid. In that case, the verifier executes, facilitates, or approves whatever action was requested or promised in response to furnishing an acceptable proof.

In an embodiment of the verification method, the applying of the further block-based error correction decoding operation includes using:
- a block size (n) corresponding to a number of symbols in the further initial codeword that is provided as input to the further block-based error correction decoding operation, and
- a further block size (k) corresponding to a further number of symbols present in the further assessment codeword that is obtained as output from the further block-based error correction decoding operation.

Preferably, the block size and further block size used by the verifier are identical to the respective block sizes as used by the prover device.

In further embodiments of the verification method, the further reference signals include respective significancy parameters and respective identity parameters. As above, the significancy parameters are indicative of a relative significance of a respective further reference signal, and the identity parameters are indicative of an identity of a respective further reference signal. In this case, constructing the further initial codeword may include rearranging the obtained further reference signals in accordance with an ordering criterion that is based on the identity parameters, to form an ordered sequence of signals with corresponding significancy parameters that are used for forming the further initial codeword.

In further embodiments of the verification method, the constructing of the further initial codeword may include steps in which the total number of further reference signals obtained by the verifier device is compared with the block size, similar as is done in the method on the prover side. The constructing may for instance comprise assessing whether this total number is larger than the block size (n). If true, then the verifier may first select from the further reference signals a number of signals equal to the block size based on the significancy parameters, and then order the selected further reference signals in accordance with the ordering criterion to form an ordered selected sequence of further reference signals from which the significancy parameters are used to form the further initial codeword. Alternatively or in addition, the constructing may comprise assessing whether the total number is smaller than the block size. If true, then the verifier may first add to the further reference signals one or more further fictitious signals until a total number of further reference and fictitious signals equals the block size. The significancy parameter of each further fictitious signal is set to a lowest possible significance value, and the identity parameter of each further fictitious signal is set to a lowest available position in accordance with the ordering criterion. The verifier may then order the further reference and fictitious signals in accordance with the ordering criterion to form an ordered sequence of further reference and fictitious signals from which the significancy parameters are used to form the further initial codeword.

In further embodiments of the verification method, the applying of the further block-based error correction decoding operation includes using a symbol size (m) corresponding to a number of bits for representing each symbol in the further initial codeword and in the further assessment codeword of the further block-based error correction decoding operation. This symbol size has a positive integer value, which is preferably identical to the value used in the method by the prover. The respective significancy parameters may be numeric values within a predetermined range of possible numeric values. In this case, the constructing of the further initial codeword may involve mapping the respective numeric values of the further significancy parameters onto corresponding symbols composed of m concatenated bits, thereby obtaining a further set of rescaled significancy parameters that forms the further initial codeword.

In embodiments, the verification method may further include, before comparing the reference hash value with the hash value:
- receiving both the hash value and a salt from the prover device, and
- generating the reference hash value from both the further assessment codeword and the salt. The input for the reference hashing function may for instance be obtained by concatenating the further assessment codeword and the received salt.

According to a third aspect, and in accordance with advantages and effects described herein above with reference to the first aspect, there is provided a prover device configured to execute a method in accordance with the first aspect.

The prover device may include a signal sensor, configured to acquire the reference signals originating from the reference sources, when the prover device is at the test location within observable range of the reference sources.

The prover device may further include a processor, configured to construct an initial codeword from the obtained reference signals, the initial codeword forming a representation of the test location. The processor may further be configured to apply a block-based error correction decoding operation on the initial codeword, thereby obtaining an assessment codeword. The processor may further be configured to apply a hashing operation on the assessment codeword, thereby obtaining a hash value representing the ZKP.

The prover device may further include a transmitter, configured to transmit the hash value to the verifier device, thus allowing the verifier device to compare the hash value with a reference hash value and thereby assess a validity of the ZKP. This transmitter may be configured to transmit both the hash value and the salt to the verifier device.

According to a fourth aspect, and in accordance with advantages and effects described herein above, there is provided a verifier device configured to execute a verification method in accordance with the second aspect.

In a further aspect, a system is provided, which includes a prover device according to the third aspect as well as a verifier device according to the fourth aspect and configured to cooperate with the prover device.

In yet further aspects, there is provided a computer program product configured to provide instructions to carry out the method according to the first aspect, the verification method according to the second aspect, or both methods.

A further aspect pertains to a computer readable medium (for instance a non-transitory computer readable medium) comprising the computer program product according to the previous aspects.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate labels appended to the reference number (for instance "13i" and "13j"). The reference number may be used without an appended label (e.g. "13") to generally refer to an unspecified instance or to all instances of that element.
Figure 1A schematically shows a ZKP system with a prover device and verifier device according to an embodiment.
Figure 1B schematically shows a verifier device according to an embodiment.
Figure 2A shows a flow-chart of a ZKP method on a prover side, according to an embodiment.
Figure 2B shows a flow-chart of a ZKP method on a verifier side, according to an embodiment.
Figure 3 shows a block diagram of a codeword with symbols as used in embodiments, and figure 3A schematically shows a bit structure of a symbol in the codeword from figure 3.
Figure 4 schematically shows information elements present in (further) reference signals as used in embodiments.
Figure 5A shows a flow-chart of a ZKP method on a prover side, according to another embodiment.
Figure 5B shows a flow-chart of a ZKP method on a verifier side, according to another embodiment.

The figures are meant for illustrative purposes only, and do not serve as restriction of the scope or the protection as laid down by the claims.

### Description of Embodiments

The following is a description of certain embodiments of the invention, given by way of example only and with reference to the figures.

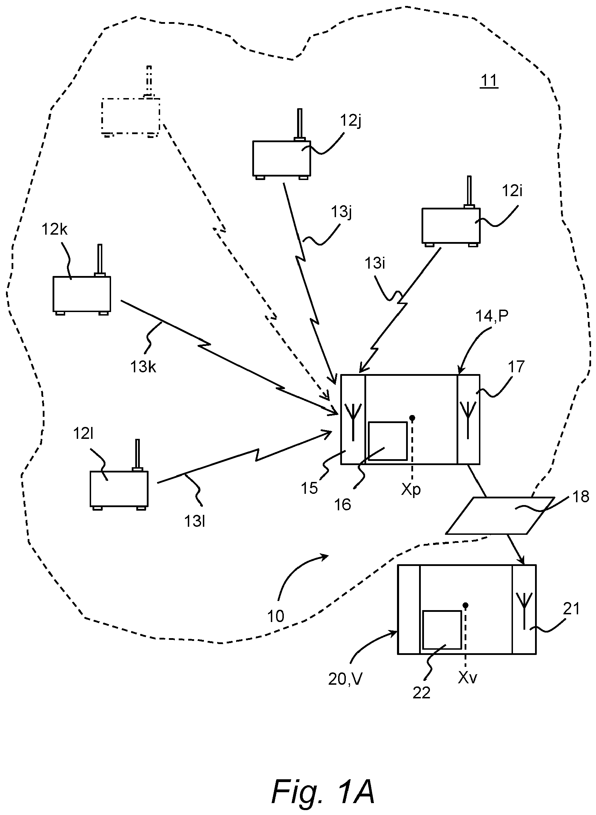

Figure 1A schematically illustrates an exemplary embodiment of a system 10 for generating and verifying a zero-knowledge proof of approximate knowledge of a particular location. The system 10 includes a prover device 14, P that is configured to acquire a plurality of respective reference signals 13 from a plurality of reference sources 12 that are within signal range.

The prover device 14 is located in a spatial region 11 in which multiple reference sources 12i, 12j, 12k, 121 are also present. Each of these reference sources 12 is configured to emit a respective reference signal 13i, 13j, 13k, 13l via a signal carrying medium, such as an electromagnetic field (e.g. radiofrequency radiation, infrared/visible light, magnetic field pulses), or the atmosphere (e.g. sound waves), or the soil (e.g. seismic waves), etc. The reference sources 12 may be configured to emit the respective reference signals 13 in a predominantly isotropic or omni-directional distribution that covers all or most of the region 11. Alternatively, the reference sources 12 may be configured to emit the reference signals 13 within a specific directivity profile that covers only a part of the region 11, such as a narrow solid angle that coincidentally covers or specifically targets the prover device 14.

In general, these reference signals 13 include or otherwise convey spatial information that allows these signals to be directly or indirectly used as (partial) metric or indicator of the location (e.g. geographic position) of the prover device 14. The reference signals 13 may for instance include explicit information on the instantaneous location, the orientation, and/or the distance of the respective signal sources 12 relative to the prover device 14. Alternatively or in addition, the reference signals 13 may convey such position information in an indirect manner, for instance by comparing signal properties like received signals strength (RSS), time of flight (TOF), signal-to-noise ratio (SNR), and/or bit error rate (BER) with known or estimated values of these metrics. It will be understood that various other location-dependent signal parameters may be used. The reference signals 13 as such do not necessarily need to carry explicit spatial information in data signals that are modulated onto a carrier wave, but may alternatively or in addition convey spatial information based on characteristics of the sources 12 themselves, such as their emission spectra, emission intensities, and/or relative positions (for instance when the method involves observing stationary light beacons or stars). Some examples of reference signals 13 for use in the proposed methods are RF signals from Wi-Fi stations and/or Bluetooth stations, navigation signals from GNSS satellites, or light from nearby beacons or distant stars. The method may be used with other types of signals, though.

The prover device 14 includes a sensor 15 that is configured to receive the emitted reference signals 13. The prover device 14 is considered to be within signal range of the particular reference source 12 when the prover device 14 is able to receive and correctly interpret the reference signal 13 from this source 12 (i.e. the received signal 13 is above the noise threshold of the sensor 15 and does not lead to signal interpretation errors).

At a specific time t (or within a small and continuous timeslot of which time t forms part of), the prover device 14 is located at instantaneous location Xp and the reference sources 12 are located at respective locations within the region 11. In the exemplary embodiment of figure 1A, the prover device 14 receives reference signals 13 from multiple distinct reference sources 12. Figure 1A schematically shows only four sources 12 and corresponding signals 13, but it will be understood that other sources are present from which reference signals may be obtained. Such other sources and signals are collectively indicated in figure 1A by dashes outlines of a reference source and signal.

The prover device 14 is further configured to process the reference signals 13 to generate a value that is representative for the test location Xp. This value serves as a zero-knowledge proof (ZKP) 18 that the prover device 14 possesses (or claims to possess) approximate knowledge of a reference location Xv, provided that the test location Xp is considered sufficiently close to the reference location Xv.

The system 10 further includes a verifier device 20, V, which is configured to receive the proof 18 transmitted by the prover device 14. The verifier device 20 is further configured to compare the received proof 18 with other data representing an acceptable proof. This comparison allows the verifier device 20 to verify whether the prover device 14 has indeed obtained knowledge of the correct reference location Xv or at least approximate knowledge of this reference location Xv in the form of a test location Xp that belongs to a set of acceptable test locations that are sufficiently close to the reference location Xv.

Preferably, the reference signals 13 emitted by the sources 12 are (approximately) location-specific and time-invariant. The location-specific property of the signals 13 implies that the sources 12 remain (approximately) stationary relative to the ground or to another reference frame associated with the region 11, at least within the timeframe associated with time t in which the prover device 14 receives the reference signals 13, and for which the verifier device 20 has up-to-date information regarding the properties of the reference sources 12 that the verifier 20 will use when verifying the proof 18 received from the prover device 14. Similarly, the time-invariant property implies that the reference signals 13 have measurable properties that stay (approximately) constant in time, at least within the above-mentioned timeframe.

However, in alternative embodiments, some or all of the reference sources 12 may be moving around within the region 11. In such cases, the verifier device 14 may have prior knowledge of the dynamics of the sources 12 (for instance, when the sources 12 move in periodic patterns along known trajectories), or the sources 12 may be configured to transmit information regarding their present constellation in a timely manner to the verifier device 14.

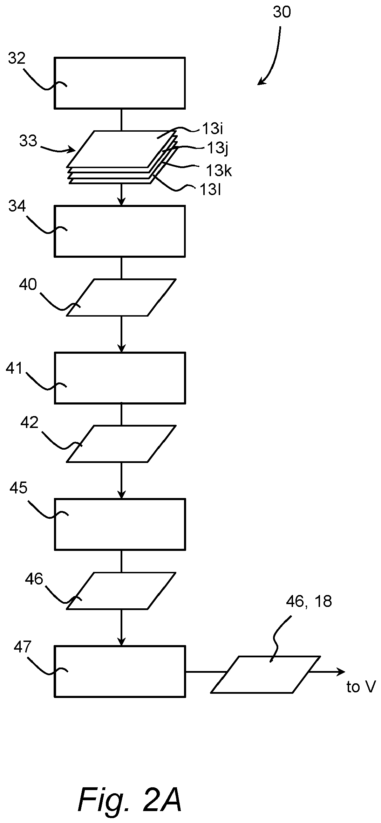

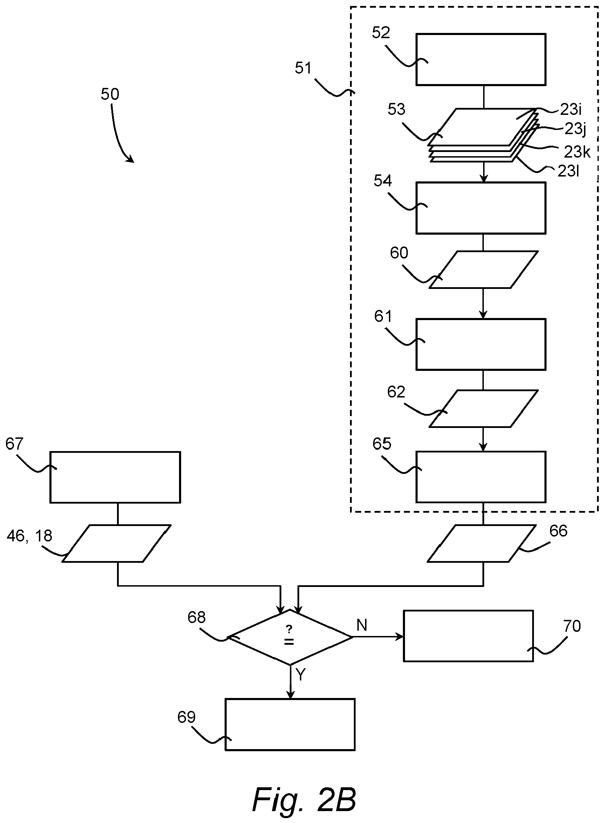

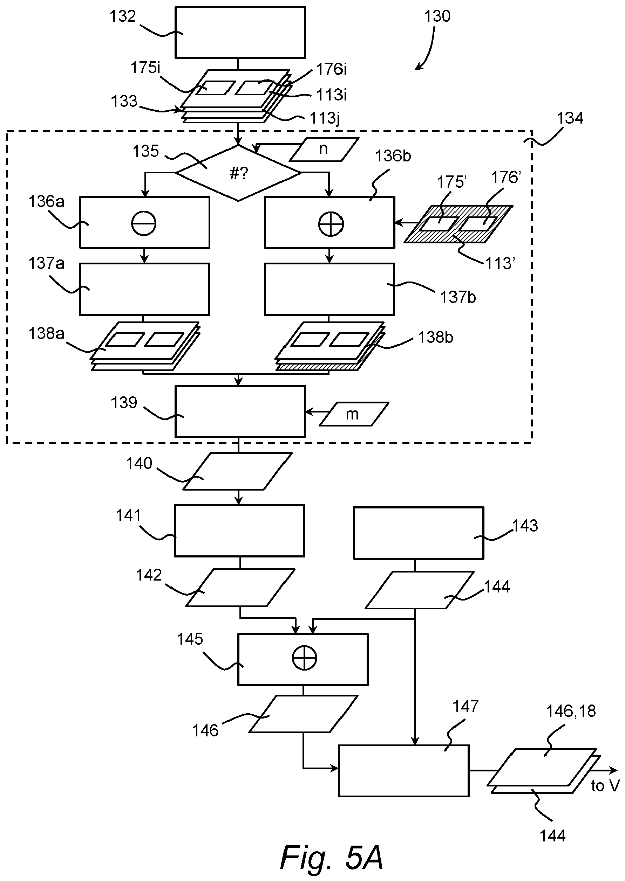

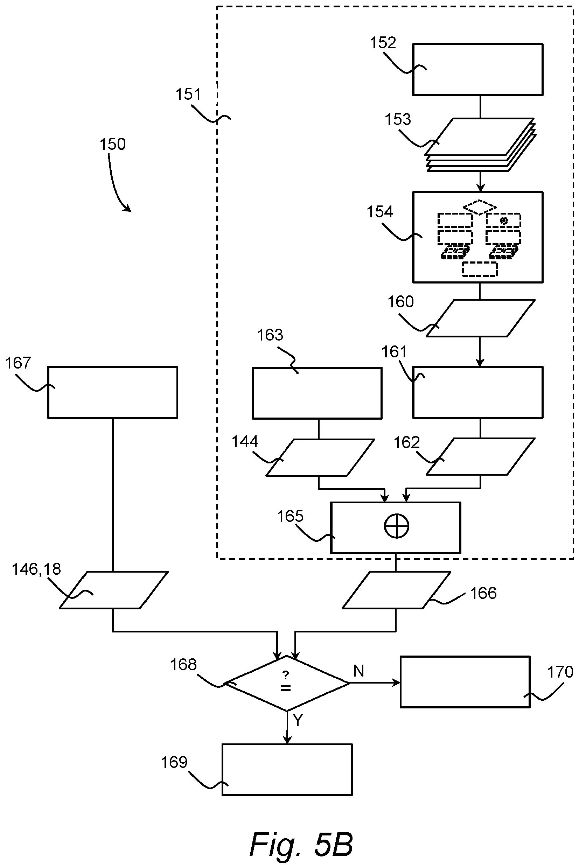

The prover device 14 is configured to generate the proof 18 from the measured reference signals 13, for instance using one of the exemplary methods explained herein below with reference to figure 2A or 5A. The prover device 14 is further configured to transmit the generated proof 18 to the verifier device 20, for instance using a wired or wireless signal connection. The verifier device 20 may then receive, process, and assess the validity of this proof 18, for instance using the exemplary method explained herein below with reference to figure 2B or 5B.

In the exemplary embodiment shown in figure 1A, the system 10 and zero-knowledge proof principles are implemented based on signals 13 received from a plurality of Wi-Fi sources 12. In this example, the sensor 15 of the prover device 14 is a Wi-Fi receiver, and the reference sources 12 are Wi-Fi transmitters (e.g. routers and access points) installed at approximately stationary locations within the region 11. Each of these Wi-Fi transmitters 12 is continuously or periodically broadcasting Wi-Fi Service Set Identifier (SSID) signals 13 via radiofrequency electromagnetic waves.

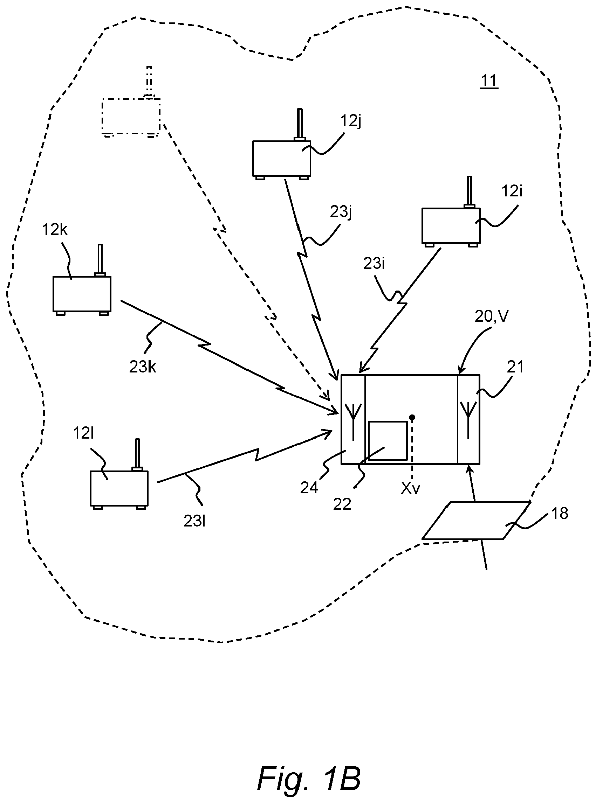

Figure 1B schematically shows a verifier device 20 according to an embodiment. The verifier device 20 is configured to verify the received proof 18 by comparing this proof 18 with reference data that represents the ground truth version of the proof. In the example of figure 1B, this reference data may be generated by the verifier device 20 itself, based on a plurality of further reference signals 23 that originate from respective ones of the reference sources 12, and which are acquired by the verifier device 20 at the reference location Xv. These reference sources 12 are the same sources (or the same selected subset of sources) from which the prover device 14 obtained the reference signals 13 that were acquired at the test location Xp. The verifier device 20 may acquire the further reference signals 23 when it is present at the reference location Xv, using a further sensor 24 that is part of the verifier device 20.

In this example, the further reference signals 23 are also Wi-Fi signals 13 that are transmitted by the Wi-Fi transmitters 12 located in the vicinity 11 of the verifier device 20.

Figure 2A illustrates a flow-chart of an exemplary method for generating a ZKP of approximate knowledge of a reference location Xv, as may be executed by the prover P. This approximate knowledge is represented by a test location Xp, for which the verifier V will assess whether it is sufficiently close to the reference location Xv.

Prior to or as an initial step of the method (not shown), the prover P and verifier V agree that the prover P will send a proof 18 to the verifier V, and that the verifier V will assess the correctness of the received proof 18 and execute, facilitate, or approve a requested or predetermined action in response to a positive outcome of this assessment and/or possible execute another action (e.g. raise an alarm) when the outcome is negative. For instance, the prover P may initially send to the verifier V a request for assessing validity of a geo-matching proof that corresponds with a particular action or permission. The verifier V, after determining that the received proof 18 is convincing, may decide to send particular data to prover P, or approve a monetary transaction, or initiate a mechanical action like opening a door, etc. The initialization actions as well as the actions taken after the ZKP has been accepted or rejected may take various different forms known to the person skilled the field, and will not be discussed in detail here.

In step 32 associated with a timeframe corresponding to a specific time t, the prover P (i.e. device 14) obtains multiple reference signals 13 acquired from the reference sources 12 and at the test location Xp. In an example, the reference signals 13 are acquired on-the-fly by a sensor 15 carried by the prover P that is present at the test location Xp (see figure 1A). Alternatively, the reference signals 13 may have been recorded and stored by the prover P at an earlier time, for instance during a previous visit of the test location Xp. In yet another alternative, the prover P may receive the signals 13 from another device that has acquired these signals 13 at the test location Xp. Irrespective of the source of acquisition, the prover P aggregates in step 32 the obtained signals 13 into a set of signals 33 associated with this time frame.

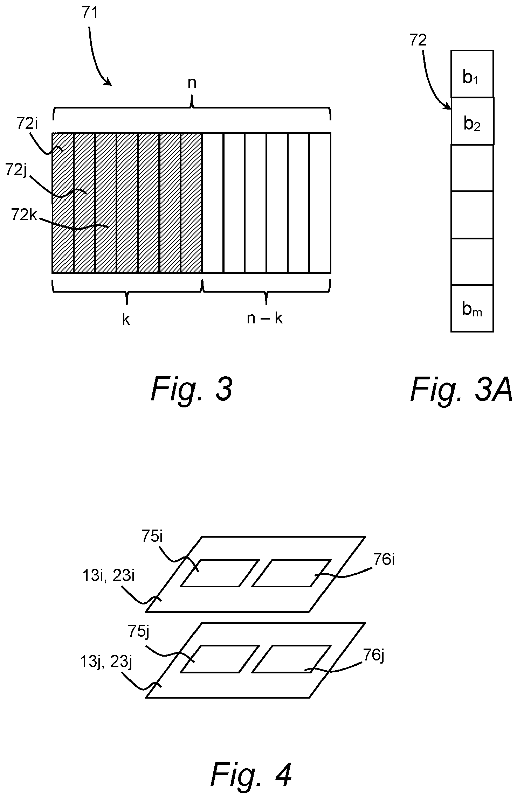

In step 34, the prover constructs an initial codeword 40 from the set 33 of obtained reference signals 13. This initial codeword 40 forms a representation of the test location Xp, and has a structure that matches the expected input dimensionality of a determined Reed-Solomon (RS) decoding operation (see e.g. figures 3 and 3A). To achieve this structure expected by the RS decoding operation, the prover P may initially rescale each of the reference signals 13 to a finite range of integer values that corresponds in a one-to-one manner with the symbol size of the Reed-Solomon decoding operation. This rescaling is similar to "binning" or "rounding" the relevant input parameter from each of the reference signals 13. This will be further explained with reference to figures 3 to 5B.

Returning to figure 2A, the prover P subjects the initial codeword 40 to the RS decoding operation in step 41. The RS decoding operation regards the initial codeword 40 as an input of multiple symbols, of which one or more symbols possibly may have been corrupted by noise, and for which the number and position of these errors need to be determined and possibly corrected for. The RS decoding operation 41 yields an output that is referred to herein as an assessment codeword 42. This assessment codeword 42 is composed of a smaller set of symbols. One or more of these symbols may be error-corrected versions of the symbols present in the initial codeword 40.

In step 45, the prover P applies a hashing operation 45 on the assessment codeword 42. This operation 45 yields a hash value 46 that represents the zero-knowledge proof 18.

As explained above, one-way cryptographical functions or "hashes" are highly suitable for meeting the first requirement for an effective ZKP. Examples of algorithms for hashing i.a. the assessment codeword 42 include secure hash algorithm family hash functions (e.g. SHA-1, SHA-2, SHA-3, SHA-256), message digest family hashes (e.g. MD4, MD5, MD6, RIPEMD), BLAKE hashes (e.g. BLAKE2, BLAKE-256, BLAKE-512), message authentication code family hash functions (e.g. PMAC, OMAC, VMAC, HMAC, and UMAC), password-based key derivation function (PBKDF), Argon2, or any hash function that satisfies the requirements of being deterministic (i.e. providing a constant output given the same input), essentially irreversible (i.e. the outputs being computationally infeasible to reverse-hash to the corresponding input), essentially non-colliding (i.e. computationally infeasible to find multiple inputs that yield the same output), and chaotic (i.e. small changes to the input yield radically different/uncorrelated outputs). The assessment codeword 42 may for instance be hashed using a computationally intensive one-way cryptographic function, such as a PBKDF or Argon2. The prover P thereby obtains the hash value 46.

In step 47, the prover P sends the hash value 46 to the verifier V (i.e. device 20). This hash value 46 allows the verifier V to make a comparison with a reference hash value 66 that the verifier V has obtained, to assess a validity of the proof 18. Some exemplary verification methods will be discussed with reference to figures 2B and 5B.

Figure 2B shows a flow-chart of an exemplary embodiment of a ZKP verification method 50, as may be executed by the verifier V, 20.

The top right part of figure 2B schematically illustrates a procedure for obtaining a reference hash value 66, which is shown by a dashed composite block 51. This hash generation procedure 51 includes various steps, of which several or all may be executed either by the verifier device V or by another device.

In step 52, a plurality of further reference signals 23 is obtained. These signals 23 originate from the respective plurality of reference sources 12, and are acquired by the verifier device V or by another device at the reference location Xv. In an example, the signals 23 are acquired on-the-fly by a further sensor 24 carried by the verifier V that is present at the reference location Xv (see figure 1B). Alternatively, the signals 23 may have been recorded and stored by the verifier V at an earlier time, for instance during a previous visit of the reference location Xv. In yet another alternative, the verifier V may receive the signals 23 from another device that has acquired these signals 23 at the reference location Xv. The signals 23 are aggregated into a set 53 of further reference signals.

In step 54, a further initial codeword 60 is constructed 54 from the further reference signals 23. This further initial codeword 60 forms a representation of the reference location Xv, in an analogous manner as was described with reference to the signals 13 representing the test location Xp (figure 1A).

In step 61, a further Reed-Solomon decoding operation is applied on the further initial codeword 60. A further assessment codeword 62 is obtained by this operation 61. Preferably, the RS codec parameters (i.a. block sizes k, n and symbol size m) used in the RS decoding operation 61 on the verifier side are identical to the parameters used in the RS decoding operation 41 executed on the prover side.

In step 65, a further hashing operation 65 is applied on the further assessment codeword 62. The reference hash value 66 is generated as an outcome of this step 65.

The left part of figure 2B shows a step 67 in which the verifier device V receives a hash value 46 from the prover device P.

In step 68, the verifier V compares the computed reference hash 66 with the hash 46 received from prover P, to assess whether the location Xp associated with the hash 46 acquired by prover P matches the expected reference location Xv known to the verifier V. If the comparing 68 reveals that the hashes 46 and 66 are equal, then the verifier V concludes that the proof 18 was valid i.e. that the location Xp determined by the prover P lies within an acceptable vicinity from V's reference location Xv. The two hashes 46 and 66 will be identical if and only if the original coordinate initial codewords 40 and 60 are less than a certain threshold distance apart. If the verifier V regards the proof 18 as valid, then the verifier V executes or authorizes whatever action was requested/promised based on an acceptable proof.

Figure 3 shows a block diagram of an RS codeword with symbols as can be used in embodiments.

The Reed-Solomon decoding operation 41 (e.g. in figure 2A or 5A) by the prover P may include using a block size n corresponding to a number of symbols that are present in the initial codeword 40 that serves as input for the RS decoding 41, and using a further block size k corresponding to a further number of symbols present in the assessment codeword 42 that is obtained as output from the RS decoding 41.

This block size n and further block size k are preferably the same as the ones used by the verifier V. The block size n then also corresponds to the number of symbols present in the initial codeword 60 that serves as input for the RS decoding 61. Similarly, the further block size k then also corresponds to the further number of symbols present in the assessment codeword 62 that is obtained by the verifier V as output from the RS decoding 61. Here, both the block size n and the further block size k are positive integers, i.e. n, k > 0. The further block size k is smaller than the block size, i.e. k < n.

The values n and k are also the values of a Reed-Solomon code RS(n,k). This code RS(n,k) transforms an input codeword composed of k symbols into an output codeword composed of n symbols, by adding n - k parity symbols to the k original symbols. Conversely, a decoding operation based on the same code RS(n,k) transforms an input codeword composed of n symbols into an output codeword composed of k symbols.

Figure 3A schematically shows a bit structure of each of the individual symbols 72 in the RS codeword from figure 3. Each of these symbols 72 is composed of a positive integer number of concatenated bits b₁, b₂, ...., bₘ. This number of bits b in each symbol 72 is described by the symbol size m > 0. By convention, each bit can assume the value 0 or 1. This implies that each symbol 72 can assume one of 2^{m} possible states in a range of 0 to 2^{m} - 1 (including end points).

Now follows a simple example of constructing a low dimensional code RS(7,2). Assume there is an 8 · 8 grid over two coordinate axes, which corresponds to 64 possible locations on a map. Each of these points can be represented by k = 2 symbols of m = 3 bits each, for a total of 6 bits. There points are not real spatial coordinates but are labels for identifying each one of the 64 different possible correct codewords of the RS codec.

A Galois Field of order q i.e. GF(q) may be used when mapping this set of symbols to an RS-code. In this case q= 2³ = 8, so that GF(8) i.e. GF(2³). In addition, n = q - 1 = 2^{m} - 1 = 7. Resulting output codewords of this RS-code will be 3 · 7 = 21 bits long.

The RS-code can be constructed by first considering a primitive polynomial p(X) of degree m = 3 on Galois Field GF(2), such as X³ + X + 1. Every element of GF(8), except zero, can be written as X^{j} for j=1,...,7. In other words, the monomial X is a cyclic generator of GF(8) modulo p(X).

Further, since k=2, every pair of coordinates representing one point on the 8 · 8 grid can be seen as a linear polynomial s(Z) = x + yZ.

Let's consider the RS generator polynomial: g(Z) = (Z - x) · (Z - x²) · (Z - x³) · (Z - x⁴) · (Z - x⁵). Then a RS-codeword for (x,y) can be generated via s(Z) · g(Z). The resulting polynomial has degree at most 6, which means 7 coefficients of 3 bits each, hence 21 bits in total.

The RS-decoding may typically involve computing a syndrome vector by solving a system of equations and correcting the codeword on which the decoding step operates. This decoding has not been standardized, and there exist different decoder procedures with different trade-offs in terms of accuracy and speed. One generally known example of constructing a RS-decoding protocol is given by the Berlekamp-Massey algorithm. However, for the specific decoding procedure used in the present methods is restricted to the use of one specific decoding protocol.

The above simple RS code transforms a pair of 3-bit symbols b₁b₂b₃ b₄b₅b₆ into a 7-tuple of 3-bit symbols: bib2b3 b4bsb6 c₁c₂c₃ c₄c₅c₆ c₇c₈c₉ c₁₀c₁₁c₁₂ c₁₃c₁₄c₁₅.

The RS code is a systematic code, meaning that two input symbols bᵢbⱼbₖ are left untouched and the five added symbols cᵢcⱼcₖ are extra parity symbols.

In general, an RS-code with an input codeword of k symbols and an output codeword of n symbols can correct up to t = ½ · (n - k) errors. In this example, five parity symbols are added, which implies that the corresponding RS-decoder can correct errors in up to two arbitrary positions when operated on an initial codeword composed of seven symbols.

Figure 4 schematically shows information elements that may be present in the reference signals 13 and further reference signals 23 as obtained by the prover P and the verifier V, respectively.

Each respective reference signal 13, 23 may include a significancy parameter 75 and a corresponding identity parameter 76.

Each significancy parameter 75 of a corresponding reference signal 13, 23 may be indicative of a relative significance of this reference signal 13, 23. For instance, the significancy parameters 75 may represent an absolute or relative magnitude of the obtained reference signals 13, 23. Criteria for determining significance of reference signals 13 may be based on a heuristic approach. For instance, the RSS, signal stability and/or a cross-sectional extent of a respective signal 13 may correlated with the proximity, the size, and/or the absolute intensity of the corresponding source 12.

Each respective identity parameter 76 of the corresponding reference signal 13, 23 may be indicative of an identity of this reference signal 13, 23. The identity parameters 76 may for instance be expressed by numerical and/or alphabetical symbols. By means of these identity parameters 76, the prover P and verifier V are allowed to uniquely associate each of the signals 13, 23 with a corresponding source 12.

In examples wherein the reference sources 12 and signals 13 are Wi-Fi transmitters and Wi-Fi signals, respectively, the significancy parameters 75 may be expressed as RSS or as received signal strength indicators (RSSI), and the identity parameters 76 may be expressed as service set identifiers (SSID) and/or a media access control (MAC) address associated with the Wi-Fi transmitter 12 from which a respective signal 13 originated.

Depending on the maximum measurement range for the significancy parameters 75 as inherently defined by the sensors 15 and 24, the significancy parameters 75 may be used directly by the prover P and verifier V as input (e.g. by concatenating) when forming the initial codewords 40 and 60, respectively. Alternatively, the parameters 75 may first be remapped or rescaled by the prover P and verifier V to an integer numerical range, before being used to construct the initial codewords 40, 60.

These significancy parameters 75 and identity parameters 76 may be exploited by the prover P and/or verifier V, in order to select or add, and then rearrange the obtained reference signals 13, 23. Examples of this will be explained below with reference to figures 5A and 5B.

Figure 5A shows a flow-chart of another exemplary embodiment of a ZKP method 130, as may be executed by the prover P (e.g. device 14 in figure 1A). Features in the method that have already been described above with reference to the method 30 in figure 2A may also be present in the method 130 shown in figure 5A and will not all be discussed here again. For the discussion with reference to figure 5A, like features are designated with similar reference numerals preceded by 100, to distinguish the embodiments.

Similar as in figure 2A, the method 130 includes step 132 in which prover P obtains reference signals 113 originating from the reference sources 12, as acquired by a sensor at test location Xp within observable range of the reference sources. In this example, each respective reference signal 113 includes a significancy parameter 175 and a corresponding identity parameter 176 (see figure 4).

In this exemplary method 130, the prover P relies on the significancy and identity parameters 175, 176 to select and rearrange elements in the set of reference signals 113 and thereby to create an ordered set of signals 138. Any function or metric for ordering the reference signals 113 may be used. The prover P and verifier V preferably know and apply the same selection and ordering methodology to the received set of reference signals that they have obtained.

Step 134 schematically illustrates a procedure for constructing an initial codeword 140, which is shown by a dashed composite block 134. This procedure 134 includes various steps, that the prover P executes, depending on determined operational conditions.

In step 135, the prover P counts a total number # of obtained reference signals 113 and compares this number # with the block size n (see figure 3). Optionally (not shown), the prover P may assess, prior to comparing the total number # with the block size n, whether the total number # is smaller than the further block size k. It true, then the prover P stops the current attempt of constructing 134 the initial codeword 140, and instead obtains a fresh set of reference signals 113 for constructing a fresh initial codeword 140.

If instead, the prover P finds in step 135 that the total number # of obtained signals 113 is larger than the block size n, then the prover P proceeds with the left branch in block 134. In this branch, the prover P selects 136a a subset of reference signals and then re-orders 137a the selected signals.

In step 136a, the prover P selects from the obtained signals 113 a number of signals equal to the block size n. The significancy parameters 175 can represent received signal magnitudes of the obtained signals 113, such as RSS values. Selecting signals 136a may then involve picking the n strongest signals from the obtained signals 133 and discarding the remaining signals 113 that are considered weaker.

In step 137a, the prover P re-orders the selected signals 113 in accordance with an ordering criterion based on the identity parameters 176 (e.g. based on alphabetical ordering of SSID). The identity parameters 176 may for instance be expressed by numbers, and the criterion may stipulate that the identity parameters be placed in numerically ascending or descending order. Alternatively or in addition, the identity parameters may be expressed by letters, and the ordering criterion may dictate an alphabetical ordering. This re-ordering 137a yields an ordered sequence of selected reference signals 138a with corresponding significancy parameters 175 that are used as basis for the initial codeword 140.

By contrast, if the prover P finds in step 135 that the total number # of obtained signals 113 is smaller than the block size n (but still larger than k), then the prover P proceeds with the right branch in block 134. In this branch, the prover P adds 136b one or more fictitious signals 113' to the obtained signals 113 and then re-orders in 137b the set of obtained and fictitious signals.

In step 136b, the prover P adds a number of fictitious signals 113' until a total number of reference and fictitious signals 113, 113' combined equals the block size n. Here, the prover P sets the significancy parameter 175' of each fictitious signal 113' to a lowest possible significance value, for instance a lowest possible value in the finite range that the sensor 15 is able to produce (e.g. an RSSI with value 0). The prover P also sets the identity parameter 176' of each fictitious signal 113' to a lowest available position in accordance with the ordering criterion (e.g. to consecutive SSID values "zzzzzzzzzzzz01", "zzzzzzzzzzzz02", etc).

In step 137b, the prover P orders the set of reference and fictitious signals 113, 113' in accordance with the ordering criterion based on the identity parameters 176, 176'. This ordering may again be alphabetical or numerical. This re-ordering 137b yields an ordered sequence of reference and fictitious signals 138b with corresponding significancy parameters 175, 175' that are used as basis for the initial codeword 140.

The RS decoding step 141 may involve operating on an initial codeword 140 that contains n symbols 72, each symbol 72 being composed of a fixed number of concatenated bits b equal to the symbol size m (explained above with reference to figure 3A). However, the significancy parameters 175 in the reference signals 113 may be represented by numeric values within a different range. Step 139 therefore involves a remapping of the respective numeric values onto corresponding symbols 72 composed of m concatenated bits, to obtain a set of rescaled significancy parameters that forms the initial codeword 140. The parameters 175 may for instance correspond to all possible sensor measurement values in a range from 0 to A (with A > 0 and the range including the endpoints). In this case, step 139 may involve multiplying respective numeric values with a factor of 2^{m} and dividing by A, followed by rounding down each obtained result to an integer number, thereby obtaining rescaled significancy parameters that all fall within the maximum possible range [0, 2^{m} - 1] for each symbol 72. The concatenated set of rescaled sensor magnitude parameters may then form the initial codeword 140.

For instance, in the exemplary Wi-Fi-based system 10 from figure 1A, step 131 may for instance involve measurement by the prover P of the SSID and RSSI of the Wi-Fi signals 13 emitted by nearby Wi-Fi transmitters 12. RSS is typically expressed in decibels relative to milliwatt (dBm) and rounded to (usually negative) integer numbers, resulting in a possible range of -100dBm to -30dBm. The decibel scale used in RSS implies that a negative dBm-value with a lower negative value corresponds to a lower RSS than a negative dBm-value closer to 0 (e.g. -50 dBm >> -70 dBm). This RSS may be transformed directly by the sensor 15, or subsequently by the processor 16, into a range of positive integer RSSI values in a byte-range of [0, 255].

As a result of the procedure 134, the prover P has constructed the initial codeword 140 indirectly from the obtained reference signals 113. Again, this initial codeword 140 is composed of n symbols 72, which each symbol 72 composed of m concatenated bits b. The initial codeword 140 nevertheless forms a representation of the test location Xp.

In step 141, the prover P feeds the initial codeword 140 to a Reed-Solomon decoding operation, to obtain an assessment codeword 142. This assessment codeword is composed of k symbols 72 (each of m concatenated bits).

In step 143, the prover first obtains a salt or other randomness value 144. In the present context, a (cryptographic) salt refers to random data that is used as additional input to a one-way function, which in this case is a hashing function. The salt 144 used in this step 143 may be a (pseudo-)random salt or a salt generated based on a shared characteristic i.e. using a Fiat-Shamir heuristic.

In step 145, the prover applies the hashing operation on the combination (e.g. concatenation) of the assessment codeword 142 and the salt 144, and thereby obtains a hash value 146 that represents the zero-knowledge proof 18. The prover P may for instance concatenate a generated sequence of numbers and/or other symbols 144 with (i.e. prepended or appended to, as schematically represented by the ⊕-symbol in block 145) the assessment codeword 142 before hashing.

In step 147, the prover P transmits the hash value 146 and the salt 144 to the verifier device V. Instead, if the prover P used a Fiat-Shamir method to generate the salt 144, then the verifier V may be configured to generate an identical salt value based on the shared characteristic, thus obviating the need for prover P to transmit the salt 144 to verifier V.

Figure 5B shows a flow-chart of another exemplary embodiment of a ZKP verification method 150, as may be executed by the verifier V (e.g. device 20 in figures 1A-B). Features in the method that have already been described above with reference to the method 50 in figure 2B may also be present in the method 150 shown in figure 5B and will not all be discussed here again. For the discussion with reference to figure 5B, like features are designated with similar reference numerals preceded by 100, to distinguish the embodiments.

As shown on the right side of figure 5B, an additional hash-related step 163 and a refined step 154 for constructing the further initial codeword 154 may be involved in the procedure 151 for obtaining a reference hash value 166.

The composite step of constructing 154 the further initial codeword 160 have a similar structure as step 134 on the prover side in figure 5A, which is schematically presented in figure 5B by small icons with dashed outlines.

Similar as in figure 5A, step 154 may include steps in which the total number # of further reference signals 123 in the set 153 obtained by the verifier device V is compared with the block size n. This step 154 may involve assessing whether this total number # is larger than the block size n, and if true, then the verifier may select a subset of n signals from the further reference signals 123 based on the significancy parameters 175, and then order the selected further reference signals 123 in accordance with the ordering criterion. Alternatively or in addition, this step 154 may involve assessing whether the total number # is smaller than the block size n, and if true, then the verifier may add further fictitious signals with zero significancy and lowest identity parameters. The verifier may then order the further reference and fictitious signals in accordance with the ordering criterion. The prover P and verifier V may have an agreement about the same significancy selection and ordering criteria to be used by both devices.

The constructing 154 of the further initial codeword 160 may also involve mapping of the respective numeric values of the further significancy parameters 175 onto corresponding symbols composed of m concatenated bits, thereby obtaining a further set of rescaled significancy parameters that forms the further initial codeword 160.

In step 163, the verifier V receives the salt value 144 from the prover P. In the subsequent step 165, the further assessment codeword 162 obtained by the verifier V is combined (e.g. concatenated) with the received salt value 144. This combination is used to generate the reference hash value 166.

In step 168, the verifier V compares the reference hash value 166 with the received hash value 146. If these hash values 146 and 166 are equal, then the verifier V regards the ZKP 18 as valid, and consequently executes, facilitates, or approves whatever action was requested or promised in response to furnishing an acceptable proof.

Now follows a simple example in which the prover P and verifier V use the methods in figures 5A-B and a simple exemplary code RS(7,2) described above to verify whether prover P has approximate knowledge of the same reference location Xv. Prover P measures at least n = 7 reference Wi-Fi sources 12 located in the vicinity 11 of its location Xp, and obtains the signal strengths 75 and SSIDs 76 from these signals 12. Prover P first selects the n=7 strongest Wi-Fi signals and discards the weakest Wi-Fi signals based on signal strength 75, and then alphabetically orders these seven strongest signals based on their SSIDs 76. Prover P thereby obtains the following exemplary sequence of signal strengths, expressed as 32-bit-range integers in decimal notation:

| | |
|---|---|
| 1) | 134 |
| 2) | 9781263 |
| 3) | 1976189732 |
| 4) | 23 |
| 5) | 466446721 |
| 6) | 34564555 |
| 7) | 3653567733 |

The prover P maps these values onto the range [0,...,7] by multiplying these values by 2³ / 2³² and then rounding down the results, obtaining the exemplary initial RS-codeword 40 composed of the rescaled signal strength values (0, 0, 3, 0, 1, 0, 6) in decimal notation.

After decoding this initial codeword, the prover P obtains a 6-bit codeword "011 110" i.e. assessment codeword (3,6) converted to decimal notation, which forms a unique identifier for one of the 64 points on the 8·8 grid. This 6-bit codeword is hashed together with a randomness and transmitted to the verifier V.

In a similar manner, the verifier V measures existing Wi-Fi SSIDs and signal strength at its position Xv. Based on an agreement with the prover P, the verifier V also selects the seven strongest signal values from the acquired reference signals, and orders these strongest values alphabetically according to SSID, and then scales these values to the range [0,7], obtaining the following decimal codeword: (0, 1, 3, 0, 5, 0, 6).

A direct comparison of the two codewords obtained by P and V would reveal that these obtained codewords differ in two positions. This may e.g. have been caused by some Wi-Fi signals being briefly altered (e.g. perturbed or attenuated) during the recording, or by the position Xv of the verifier V being slightly different from the position Xp of the prover P. Because there are only two errors, whatever block-based error correction decoding technique is being used, the resulting 6-bit assessment codeword will still end up being (3,6). This means that the hash of this assessment codeword (possibly combined with the same salt) will result in the same hash value, which allows the verifier V to verify that its reference location Xv is "identical" (i.e. identical within the approximation allowed by the methods described herein) with the test location Xp.

The present invention may be embodied in other specific forms. The described embodiments are to be considered in all respects only as illustrative and not restrictive. The scope of the invention is, therefore, indicated by the appended claims rather than by the foregoing description. It will be apparent to the person skilled in the art that alternative embodiments of the invention can be conceived and reduced to practice. All changes which come within the meaning and range of equivalency of the claims are to be embraced within their scope, to the extent permitted by national law.

In the above-described exemplary embodiments, Wi-Fi signals were received and used by the prover device and verifier device to generate proof-of-approximate-location hashes. In alternative embodiments, various other types of reference signal sources may be used, like for instance base station signals from cellular communication networks, global navigation satellite system signals, Bluetooth transmitters, television and/or radio transmitters, light signals from nearby optical beacons, city lighting, or distant stars, or a combination of several or all of such distinct types of signal sources.

In the exemplary embodiments, the (further) block-based error correction decoding operations were based on Reed-Solomon codes. However, alternative embodiments may involve decoding operations corresponding to one or more subsets of block-based error correction codes that are different from or are a superset of RS codes. Such embodiments may for instance involve decoding operations based on non-binary BCH codes, cyclic block codes, or linear block codes (see for instance reference [1]).

Those of skill in the art would understand that information and signals may be represented using any of a variety of different technologies and techniques. Those of skill would further appreciate that the various illustrative logical blocks, modules, circuits, and algorithm steps described in connection with the embodiments disclosed herein may be implemented as electronic hardware, computer software, or combinations of both. To illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, solid state disk, removable disk, CD/DVD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

### List of Reference Symbols

Similar reference numbers that have been used in the description to indicate similar elements (but differing only in the hundreds) have been omitted from the list below, but should be considered implicitly included.
- 10: zero-knowledge proof (ZKP) system
- 11: spatial region
- 12: reference source
- 13: reference signal
- 14, P: prover device
- 15: signal sensor
- 16: processor
- 17: transmitter
- 18: ZKP
- 20, V: verifier device
- 21: receiver
- 22: further processor
- 23: further reference signal
- 24: further signal sensor
- 30: ZKP generation method
- 32: obtain reference signals
- 33: set of reference signals
- 34: construct initial codeword
- 40: initial codeword
- 41: apply RS decoding
- 42: assessment codeword
- 45: compute hash
- 46: hash
- 47: transmit hash
- 50: ZKP verification method
- 51: obtain reference hash
- 52: obtain further reference signals
- 53: set of further reference signals
- 54: construct further initial codeword
- 60: further initial codeword
- 61: apply further RS decoding
- 62: further assessment codeword
- 65: compute reference hash
- 66: reference hash
- 67: receive hash (from P)
- 68: compare hashes
- 69: accept ZKP
- 70: reject ZKP
- 71: RS codeword
- 72: symbol
- 75: significancy parameter
- 76: identity parameter
- 135: assess number # of signals
- 136a: select reference signals
- 136b: add fictitious signal(s)
- 137a: order selected reference signals
- 137b: order reference and fictitious signals
- 138a,b: ordered signals
- 139: rescale significancy parameters
- 143: generate salt
- 144: salt value
- 147: transmit hash and salt
- 163: receive salt (from P)
- b, c: bit
- k: further block size
- m: symbol size
- n: block size
- #: total number of obtained reference signals
- Xp: test location
- Xv: reference location

### Cited Reference

[ref.1] Huffman W.C., Pless V. 'Fundamentals of Error Correcting Codes', Cambridge University Press 2003, ISBN 9780521782807.

## Claims

1. A method (30), in a prover device (14, P), for generating a zero-knowledge proof (ZKP) (18) of approximate knowledge of a reference location (Xv), the method comprising:
obtaining (32) a plurality of reference signals (13) originating from a respective plurality of reference sources (12) and acquired at a test location (Xp) within observable range of the reference sources;
constructing (34) an initial codeword (40) from the obtained reference signals (13), the initial codeword forming a representation of the test location (Xp);
applying a block-based error correction decoding operation (41) on the initial codeword (40), thereby obtaining an assessment codeword (42);
applying a hashing operation (45) on the assessment codeword (42), thereby obtaining a hash value (46) representing the ZKP (18), and
providing (47) the hash value (46) to a verifier device (20, V), to allow the verifier device to compare the hash value (46) with a reference hash value (66) and thereby assess a validity of the ZKP (18).

2. The method (30) according to claim 1, wherein applying the block-based error correction decoding operation (41) comprises:
using a block size (n) corresponding to a number of symbols present in the initial codeword (40) that is provided as input to the block-based error correction decoding operation, and
using a further block size (k) corresponding to a further number of symbols present in the assessment codeword (42) that is obtained as output from the block-based error correction decoding operation, the further block size being smaller than the block size.

3. The method (30) according to claim 1 or 2, wherein the reference signals (13) include respective significancy parameters (75) and respective identity parameters (76), each of the significancy parameters (75) being indicative of a relative significance of a respective reference signal (13), and each of the identity parameters (76) being indicative of an identity of a respective reference signal;
wherein constructing (34) the initial codeword (40) comprises:
ordering part or all of the obtained reference signals (13) in accordance with an ordering criterion that is based on the identity parameters (76), to form an ordered sequence of signals with corresponding significancy parameters (75) that are used as basis for forming the initial codeword (40).

4. The method (130) according to claim 3, wherein constructing (134) the initial codeword (140) comprises assessing (135) whether a total number (#) of reference signals (113) obtained by the prover device (14, P) is larger than the block size (n), and if true, then:
selecting (136a) from the reference signals (113) a number of selected reference signals based on the significancy parameters (175), the number being equal to the block size (n), and;
the ordering of part or all of the obtained reference signals (113) including ordering (137a) the selected reference signals in accordance with the ordering criterion, to form an ordered sequence of selected reference signals (138a) with corresponding significancy parameters (175) that form or are used as basis for the initial codeword (140).

5. The method (130) according to claim 3 or 4, wherein constructing (134) the initial codeword (140) comprises assessing (135) whether a total number (#) of reference signals (113) obtained by the prover device (14, P) is smaller than the block size (n), and if true, then:
adding (136b) to the reference signals (113) one or more fictitious signals (113') until a total number of reference and fictitious signals (113, 113') equals the block size (n), wherein the significancy parameter (175') of each fictitious signal (113') is set to a lowest possible significance value, and the identity parameter (176') of each fictitious signal is set to a lowest available position in accordance with the ordering criterion;
the ordering of part or all of the obtained reference signals (113) including ordering (137b) the reference and fictitious signals (113, 113') in accordance with the ordering criterion, to form an ordered sequence of reference and fictitious signals (138b) with corresponding significancy parameters (175, 175') that form or are used as basis for the initial codeword (140).

6. The method (130) according to any one of claims 3 - 5, wherein applying the block-based error correction decoding operation (141) comprises using a symbol size (m) corresponding to a number of bits for representing each symbol (72) in the initial codeword (140) and in the assessment codeword (142) of the block-based error correction decoding operation;
wherein the significancy parameters (175) are respective numeric values within a predetermined range of possible numeric values;
and wherein constructing (134) the initial codeword (140) comprises mapping (139) the respective numeric values onto corresponding symbols composed of the symbol size (m) number of bits, thereby obtaining a set of rescaled significancy parameters that forms the initial codeword (140).

7. The method (130) according to any one of claims 1 - 6, further comprising:
obtaining (143) a salt (144);
applying the hashing operation (145) on the combination of the assessment codeword (142) with the salt (144) to obtain the hash value (146), and
providing (147) both the hash value (146) and the salt (144) to the verifier device (20, V), to allow the verifier device to generate (165) a reference hash value (166) using the salt (144) and to compare the hash value (146) with the reference hash value (166).

8. A verification method (50), in a verifier device (20, V), for verifying a zero-knowledge proof, ZKP, (18) of approximate knowledge of a reference location (Xv), the verification method comprising:
receiving (67) a hash value (46) obtained by a prover device (14, P) using a method in accordance with any one of claims 1 - 7;
obtaining a reference hash value (66) that is or was generated by the verifier device or by another device, using a generation method (51) that includes:
obtaining (52) a plurality of further reference signals (23) originating from the respective plurality of reference sources (12) and acquired at the reference location (Xv) within observable range of the reference sources;
constructing (54) a further initial codeword (60) from the obtained further reference signals (23), the further initial codeword forming a representation of the reference location (Xv);
applying a further block-based error correction decoding operation (61) on the further initial codeword (60), thereby obtaining a further assessment codeword (62);
applying a further hashing operation (65) on the further assessment codeword (62), thereby obtaining the reference hash value (66);
the verification method further comprising:
comparing (68) the reference hash value (66) with the hash value (46) to assess a validity of the ZKP (18).

9. The verification method (50) according to claim 8, wherein applying the further block-based error correction decoding operation (61) comprises using:
a block size (n) corresponding to a number of symbols present in the further initial codeword (60) that is provided as input to the further block-based error correction decoding operation, and
a further block size (k) corresponding to a further number of symbols present in the further assessment codeword (62) that is obtained as output from the further block-based error correction decoding operation.

10. The verification method (50) according to claim 8 or 9, wherein the further reference signals (23) include respective significancy parameters (75) and respective identity parameters (76), each of the significancy parameters (75) being indicative of a relative significance of a respective further reference signal (23), and each of the identity parameters (76) being indicative of an identity of a respective further reference signal;
wherein constructing (54) the further initial codeword (60) comprises:
ordering part or all of the obtained further reference signals (23) in accordance with an ordering criterion that is based on the identity parameters (76), to form an ordered sequence of signals with corresponding significancy parameters (75) that are used as basis for forming the further initial codeword (60).

11. The verification method (150) according to claim 10, wherein applying the further block-based error correction decoding operation (161) comprises using a symbol size (m) corresponding to a number of bits for representing each symbol (72) in the further initial codeword (160) and in the further assessment codeword (162) of the further block-based error correction decoding operation;
wherein the significancy parameters (175) are respective numeric values within a predetermined range of possible numeric values;
and wherein constructing (154) the further initial codeword (160) comprises mapping the respective numeric values onto corresponding symbols composed of the symbol size (m) number of bits, thereby obtaining a further set of rescaled significancy parameters that forms the further initial codeword (160).

12. The verification method (150) according to any one of claims 8 - 11, further comprising, prior to comparing (168) the reference hash value (166) with the hash value (146):
receiving (167, 163) both the hash value (146) and a salt (144) from the prover device (14, P);
generating (165) the reference hash value (166) from both the further assessment codeword (162) and the salt (144).

13. The method (30, 50) according to any one of claims 1 - 7 and/or any one of claims 8 - 12, wherein the reference signals (13) and/or the further reference signals (23) are Wi-Fi signals transmitted by a plurality of Wi-Fi signal sources (12) located in a vicinity (11) of the prover device (14) and/or the verifier device (20);
wherein the significancy parameters (75) are expressed as a received signal strength indicator, and the identity parameters (76) are expressed as at least one of a service set identifier and a media access control address.

14. A prover device (14, P) configured to execute a method (30) in accordance with any one of claims 1 - 7, or a verifier device (20, V) configured to execute a verification method (50) in accordance with any one of claims 8 - 12.

15. A computer program product configured to provide instructions to carry out a method (30) according to any one of claims 1 - 7 or a method (50) according to any one of claims 8 - 12 when loaded on a computer arrangement (14, 16; 20, 22).
